# EUROPÄISCHE PATENTANMELDUNG

(11) **EP 3 372 967 A1**
(43) Veröffentlichungstag der Anmeldung: **12.09.2018**
(21) Anmeldenummer: 17020090.1
(22) Anmeldetag: 08.03.2017
(51) Int. Cl.: G01J 5/00, G01N 25/72, H02S 50/10

(54) **VERFAHREN ZUM ERKENNEN VON SYSTEMFEHLERN EINER PHOTOVOLTAIKANLAGE**

(71) Anmelder: vaireco GmbH, 78467 Konstanz (DE)
(72) Erfinder: Herbst, Wolfgang, 78464 Konstanz (DE); Varner, Kenneth, 78464 Konstanz (DE)
(74) Vertreter: Heyerhoff Geiger & Partner Patentanwälte PartGmbB

(57) **Zusammenfassung**

Die Erfindung geht aus von einem Verfahren zum Erkennen von Systemfehlern (26, 28, 30, 32) einer Photovoltaikanlage (2).

Um eine zuverlässige Erkennung verschiedener Systemfehler (26, 28, 30, 32) zu erreichen, wird vorgeschlagen, dass erfindungsgemäß ein Fluggerät (8) die Photovoltaikanlage (2) überfliegt und thermografische Bilder (18) im infraroten Spektralbereich von PV-Modulen (4) der Photovoltaikanlage (2) aufnimmt, die Bilder (18) auf thermische Unterschiede untersucht werden und aus in vorbestimmter Weise auffälligen Unterschieden Systemfehler (26, 28, 30, 32) bestimmt werden.

## Beschreibung

Die Erfindung betrifft ein Verfahren zum Erkennen von Systemfehlern einer Photovoltaikanlage.

Große technische Anlagen, beispielsweise Windparks oder Solaranlagen mit einem großen Feld von PV-Modulen, können heute von unbemannten Fluggeräten, beispielsweise Multikoptern, auf technische Defekte untersucht werden. Hierfür ist das Fluggerät mit einer Kamera ausgestattet, das während des Flugs Bilder von der Anlage beziehungsweise einem interessierenden Bauteil erstellt und zur Defekterkennung auf einer Speicherkarte an Bord des Fluggeräts abspeichert. Nach dem Flug werden die aufgenommenen Bilder von der Speicherkarte ausgelesen und auf Defekte hin überprüft. Auf eine aufwändige Begehung der Anlage kann verzichtet werden.

Es ist eine Aufgabe der vorliegenden Erfindung, ein zuverlässiges Verfahren zum Erkennen von unterschiedlichen Systemfehlern einer Photovoltaikanlage anzugeben.

Diese Aufgabe wird durch ein Verfahren der eingangs genannten Art gelöst, bei dem erfindungsgemäß ein Fluggerät die Photovoltaikanlage überfliegt und zumindest ein thermografisches Bild im infraroten Spektralbereich von PV-Modulen der Photovoltaikanlage aufnimmt, das eine oder mehrere solcher Bilder auf thermische Unterschiede untersucht wird und aus in vorbestimmter Weise auffälligen Unterschieden Systemfehler bestimmt werden.

Die Erfindung geht von der Überlegung aus, dass Systemfehler eines oder mehrerer PV-Module einer Photovoltaikanlage durch einen thermischen Unterschied gegenüber intakten Nachbarmodulen auffallen. Ein Modul mit einem Systemfehler heizt sich an der fehlerhaften Modulfläche stärker auf, als dies bei einer intakten Fläche der Fall ist, da weniger beziehungsweise keine Strahlungsenergie in elektrische Energie umgewandelt wird und damit bei Sonneneinstrahlung mehr Wärme an der fehlerhaften Fläche entsteht. Der Farbwert des thermografischen Bilds kann somit als maschinell auswertbarer Fehlerindex verwendet werden.

Da ein solches Verfahren zudem eine höhere Sensitivität bei der Fehlererkennung aufweist als ein rein optisches Verfahren, können Fehler genauer klassifiziert werden. Da jede Fehlerklasse gegebenenfalls verschiedene Ursachen hat und damit auf verschiedene defekte Bauteile zurückzuführen ist, hat eine genaue Fehlerklassifizierung den Vorteil, dass ein Reparaturdienst bereits im Voraus die Reparatur einer Vielzahl von Fehlern einer großen Anlage hinsichtlich Arbeitsaufwand und Ersatzteile exakter planen kann, als dies bei einem manuellen optischen Verfahren möglich wäre.

Die Untersuchung kann unter Verwendung von nur einem einzigen oder mehreren Bildern durchgeführt werden. Im Folgenden wird, ohne das Verfahren mit nur einem einzigen Bild auszuschließen, nur von mehreren Bildern gesprochen.

Ein Systemfehler kann ein jeglicher Ausfall einer aktiven Fläche auf einem oder mehreren PV-Modulen der Photovoltaikanlage sein. Es kann ein Modulfehler sein, also der Ausfall eines gesamten PV-Moduls oder eines Teils von dessen aktiver Fläche, oder ein Ausfall mehrerer Module, beispielweise ein Ausfall eines Strings oder eines noch größeren Bereichs, z.B. durch einen schadhaften Wechselrichter.

Je nach Größe kann der Fehler klassifiziert werden, beispielsweise in eine der Klassen: Anlagenteilfehler, Stringfehler, Modulfehler, PID-Fehler (Potential Induzierte Degradation), Diodenfehler oder Zellfehler. Bei einem Anlagenteilfehler sind eine Vielzahl von Modulen defekt, z.B. durch einen Defekt eines Wechselrichters. Bei einem Stringfehler sind mehrere nebeneinander liegende Module eines Strings entsprechend thermisch auffällig. Bei einem Modulfehler ist die defekte Fläche über ein gesamtes Modul erstreckt und gleichmäßig erwärmt, also inaktiv. Bei einem PID-Fehler ist eine aktive Modulfläche am Rahmen wärmer und in der Mitte des Moduls kühler, die Leistung des Moduls ist deutlich herabgesetzt. Ein Diodenfehler betrifft üblicherweise die gesamte Länge und einen ganzzahligen Bruchteil der Modulbreite, beispielsweise 1/2, 1/3 oder 1/4 der Modulbreite. Ein Zellfehler weist einen vorbestimmten Prozentsatz einer Modulfläche auf.

Dem Farbwert kann bei jedem Pixel von thermografischen Bildern, auch radiometrische Bilder genannt, direkt ein Temperaturwert zugeordnet sein, sodass der thermische Unterschied direkt als Temperaturunterschied erfasst werden kann. Ist eine Modulfläche um einen vorbestimmten Farb-, Grau- beziehungsweise Temperaturwert anders als benachbarte Referenzflächen, so kann dies als ein Kriterium für einen Systemfehler verwendet werden. Da der thermische Unterschied in einem thermografischen Bild numerisch als Unterschiede in Werten von Pixeln vorliegt, können die Pixel maschinell ausgelesen und auf entsprechende Wertunterschiede untersucht werden.

Zweckmäßigerweise werden bei der Auswertung Pixelfelder vorbestimmter Größe gemittelt, sodass Ausreißer nicht zu Fehlbestimmungen von Systemfehlern führen.

Ein thermischer Unterschied kann in einem Unterschied in einem Farbwert, einem Grauwert, einem Bildwert und/oder einem Wert eines anderen Parameters eines Pixels vorliegen, wobei im Folgenden vereinfacht nur von einem Farbwert die Rede ist, der jedoch alle möglichen Farbwert- , Grauwert- oder Numerik-Formatierungen umfassen soll.

Das Fluggerät kann ein bemanntes Fluggerät sein, wie ein Flugzeug oder ein Helikopter. Dieses überfliegt die Anlage und nimmt ein oder mehrere thermografisch Bilder der Anlage auf, die noch im Flugzeug oder später in einem Gebäude auf thermische Unterschiede und Systemfehler untersucht werden. Dieses Verfahren hat den Vorteil, dass das Flugzeug mit eine hochauflösenden und schweren Kamera bestückt sein kann, die die gesamte Anlag ein einem oder wenigen Bildern aufnehmen kann.

Zweckmäßigerweise ist das Fluggerät jedoch ein unbemanntes Fluggerät, insbesondere ein ferngesteuerter Multikopter, beziehungsweise allgemeiner ein small unmanned aircraft (SUA) und oder ein micro air vehicle (MAC). Es ist zweckmäßigerweise ein Rotorflügler und wiegt insbesondere weniger als 50 kg. Dieses kann mit geringem Aufwand geflogen werden und kann wendig über die Anlage gelenkt werden, z.B. ein Schleifen zum Abscannen der gesamten Anlage.

Die Kamera des Fluggeräts kann senkrecht nach unten ausgerichtet sein bei waagerechtem Fluggerät. Auf diese Weise entsprechen dessen zweidimensionale Koordinaten - die Flughöhe also ausgenommen - denen des Bildzentrums des von der Kamera aufgenommen Bilds beziehungsweise Films. Liegt die Störung in der Bildmitte, so kann die Position des Fluggeräts mit derjenigen der Störung gleichgesetzt werden.

Um einen aufgefundenen Systemfehler innerhalb der Photovoltaikanlage zu lokalisieren, sollte die Position eines Moduls, eines Strings oder eines Teils einer Anlage bekannt sein. Da eine Lokalisierung mit einer höheren Bildauflösung vereinfacht wird, ist es vorteilhaft, wenn zusätzlich zu den thermografischen Bildern korrespondierende Bilder im visuellen Spektralbereich aufgenommen werden und die Lage der Module innerhalb der Photovoltaikanlage aus den visuellen Bildern ermittelt wird.

Weiter ist es vorteilhaft, wenn aus Bildern der PV-Module die darin sichtbare Fläche der PV-Module durch Mustererkennung bestimmt wird, beispielsweise so, dass jeder Bildpixel einem PV-Modul oder einer Modulumgebung zugeordnet werden kann. Auf diese Weise können zur Bestimmung der thermischen Unterschiede nur Modulpixel herangezogen werden, sodass störende Umgebungseinflüsse unterdrückt werden.

Um ein Modul möglichst exakt örtlich lokalisieren zu können, ist es vorteilhaft, wenn aus Bildern der PV-Module die darin sichtbare Fläche der PV-Module durch Mustererkennung bestimmt wird, beispielsweise durch eine Rechteckerkennung. Es kann ein Referenzpunkt im Modul festgelegt werden, beispielsweise ein geometrischer Modulmittelpunkt, der die Lage des Moduls charakterisiert. Nun kann die Modulposition beziehungsweise die Referenzposition relativ zu einem anlagefesten Ortspunkt bestimmt werden.

Wird eine größere PV-Anlage überflogen, die nur mit mehreren nebeneinanderliegenden Bildern insgesamt aufnehmbar ist, so ist es vorteilhaft, diese Bilder zu einem Gesamtbild zusammenzufügen, zweckmäßigerweise durch ein Bild-Stitching, ein Fotogrammmetrie-Verfahren oder ein anderes softwarebasiertes Verfahren. Ein anlagefester Ortspunkt liegt nun im gleichen Bild wie der Referenzpunkt eines Moduls, sodass die Lage des Moduls aus dem Gesamtbild abgelesen werden kann. Beispielsweise wird eine Maßstabsbestimmung durchgeführt, also die Größe eines Pixels in der realen Anlage bestimmt, sodass Punkte im Bild mit diesem Maßstab vermessen und in ihrer Position in der Anlage bestimmt werden können.

Um einen thermischen Unterschied beziehungsweise Farbunterschied zuverlässig zu bestimmen, ist es vorteilhaft, wenn eine Referenzfarbe einer Referenzfläche bestimmt wird, zu der der Farbunterschied bestimmt wird. Die Referenzfläche weist zweckmäßigerweise ein vorbestimmtes Flächenmaß oder eine noch größere Fläche auf, sodass Abbildungsfehler oder kleinere Lichtinhomogenitäten in den thermografischen Bildern nicht zu Fehlerkennungen führen. Das Flächenmaß ist insbesondere abhängig von der Art des zu erkennenden Systemfehlers und kann mehrere Module umfassen. Ist beispielsweise ein gesamter String ausgefallen, so ist die Lage der Referenzfläche entsprechend auf die Umgebung des Strings anzupassen und größer, als bei einem Ausfall nur einer Teilfläche eines PV-Moduls.

Die Referenzfläche sollte defektfrei sein, was durch eine Bestimmung der Farbhomogenität der Referenzfläche feststellbar ist. Die notwenige Farbhomogenität zur Klassifizierung als intakte Referenzfläche ist zweckmäßigerweise vorbestimmt.

Zur Quantifizierung eines Farbunterschieds ist es sinnvoll, die Farbe der Referenzfläche und der eventuellen fehlerhaften Fläche durch Mittelung über die entsprechende Fläche zu bestimmen. Der Referenzfläche wird also nur eine einzige Farbe zugewiesen, die beispielsweise aus der Mittelung aller Farbwerte aller Pixel dieser Fläche entsteht. Beim Vergleich der Farben zweier Flächen stehen sich also nur zwei Farben gegenüber, deren Unterschied einfach zu quantifizieren ist.

Nun kann innerhalb eines vorbestimmten Abstands von dieser farbhomogenen Fläche eine Farbabweichung von zumindest einer Modulteilfläche zur Referenzfläche quantifiziert werden. Ist dieser Farbunterschied größer als ein vorbestimmter Unterschied, so handelt es sich um einen thermisch auffälligen Unterschied, und die untersuchte und in der Farbe abweichende Fläche kann als Systemfehler klassifiziert werden.

Wird beispielsweise ein Farbsprung innerhalb eines Moduls oder zwischen zwei benachbarten Modulen erkannt, so kann eine Referenzfläche neben oder beidseitig um die farbig unterschiedliche Fläche ermittelt werden, die also ausreichend farbhomogen und ausreichend groß ist.

Um die Wahrscheinlichkeit von Fehlinterpretationen zu verringern, sollte die Größe einer fehlerhaften Fläche quantifiziert und untersucht werden. Zweckmäßigerweise wird die Größe einer thermisch auffällig unterschiedlichen Fläche in Relation zu einer Modulgröße gesetzt. Die Relation der Größe einer Defektfläche beziehungsweise thermisch auffälligen Fläche zu einer Modulgröße ist ein guter Indikator zur Bestimmung der Defektwahrscheinlichkeit. Insofern kann die Größe einer thermisch auffällig unterschiedlichen Fläche in Relation zu einer Modulgröße gesetzt werden, und es kann unter Verwendung der Relation eine Defektwahrscheinlichkeit bestimmt werden.

Bei großen PV-Anlagen ist das Zusammensetzen von sehr vielen Einzelbildern zu einem Überblicksbild der gesamten Anlage unter Umständen mit einem sehr hohen Rechenaufwand verbunden. Um diesen Aufwand bei jeder einzelnen Untersuchung zu vermeiden, ist es vorteilhaft, wenn eine Mustererkennung auf ein Einzelbild und auf ein früher gewonnenes Überblicksbild angewendet wird und aus einem Vergleich der Muster beider Bilder die Lage des Einzelbilds in der Gesamtanlage bestimmt wird. Dies kann geschehen, wenn die individuelle Stellung von mehreren Modulen zueinander bestimmt wird und mit Modulpositionen aus einem Überblicksbild der Photovoltaikanlage verglichen wird. PV-Module sind nicht ganz exakt gleich zueinander ausgerichtet sondern weisen stets eine gewisse Individualität in ihrer Ausrichtung zueinander auf, insbesondere wenn eine größere Gruppe von Modulen auf einem Bild hochaufgelöst zu erkennen ist. Durch Mustererkennung kann dieses Modulmuster nun mit einer bestehenden Gesamtabbildung der Photovoltaikanlage verglichen werden und in das Gesamtbild eingefügt werden, sodass hieraus die Lage dieser Module innerhalb der Photovoltaikanlage bestimmt werden kann.

Zweckmäßigerweise werden die einem Einzelbild beziehungsweise Teilbild der Anlage zugeordneten Geokoordinaten bei der Zuordnung einer Modulabbildung zu einem Modul der Anlage verwendet. Durch die Geokoordinaten kann die Lage eines Einzelbilds in einem Gesamtbilder oder Gesamtplan einer Anlage bereits mit gewisser Genauigkeit bestimmt werden, sodass sich die Mustererkennung auf diesen Teil der Anlage beschränken kann.

Die Auswertung einer Vielzahl von thermografischen Bildern einer großen Photovoltaikanlage kann einige Zeit in Anspruch nehmen. Enthält die Anlage größere Defekte, beispielsweise ausgefallene Strings, so ist es vorteilhaft, wenn diese zügig erkannt werden, ohne dass auf die detaillierte Auswertung eines jeden Moduls der Anlage gewartet werden muss. Es ist daher wünschenswert, wenn schwere Defekte möglichst zügig als solche erkannt und beispielsweise an einen Anlagenbetreiber gemeldet werden.

Dies kann erreicht werden, wenn das unbemannte Fluggerät von einem Bediener am Boden ferngesteuert wird, ein von einer Kamera des unbemannten Fluggeräts aufgenommener Live-Stream auf einer Anzeige beim Bediener dargestellt wird und der Bediener während des Flugs des Fluggeräts über die Photovoltaikanlage eine optisch auffällige Stelle aus der Darstellung erkennt. Die Lage der optisch auffälligen Stelle kann zügig an den Betreiber übermittelt werden, ohne dass es hierfür einer aufwändigen Auswertung bedarf.

Der Live-Stream kann mit einer Infrarotkamera aufgenommen werden, sodass thermische Unterschiede im Stream unmittelbar zu erkennen sind. Demgegenüber kann ein Live-Stream, der dem Bediener bei einem Steuern des Fluggeräts zu anderen Zwecken angezeigt wird, z.B. zur Überprüfung der Flugroute, von einer Kamera aufgenommen werden, die im sichtbaren Spektralbereich sensitiv ist.

Zur Lokalisierung der auffälligen Stelle kann der Bediener beim Überflug über die Stelle ein Signal erzeugen. Durch das Signal kann die Übermittlung der Geokoordinaten des Fluggeräts über dieser Stelle und insbesondere einer Abbildung der auffälligen Stelle getriggert werden, beispielsweise an einen Server, insbesondere ein Managementsystem des Anlagenbetreibers. Der Server ist ein bodengebundenes System oder ein Teil davon, das zweckmäßigerweise zur Einleitung einer Behebung der Störung vorbereitet und mit hierfür notwendigen Programmen ausgerüstet ist. Der Server kann ein Managementsystem eines Systembetreibers, ein Rechner einer Leitstelle oder dergleichen sein. Beispielsweise erzeugt der Server einen Reparaturauftrag, der die Schadensart und den Schadensort der Störung beinhaltet.

Ein effektives Abfliegen einer großen Photovoltaikanlage ist eine anspruchsvolle Tätigkeit, denn es sollten keine Module in den Einzelbildern ausgelassen werden und die Einzelbilder sollten einander nicht zu stark überlappen, um die Anzahl der Bilder möglichst gering zu halten. Die Bildaufnahme und die nachfolgenden Auswertungen können insofern erheblich vereinfacht werden, wenn eine Flugroute des Fluggeräts über die Photovoltaikanlage bestimmt wird und das Fluggerät diese Flugroute automatisiert abfliegt.

Die Bestimmung einer effizienten Flugroute kann erleichtert werden, wenn vom Fluggerät ein Übersichtsbild der Photovoltaikanlage erstellt wird, das auf einer Anzeige eines das Fluggerät vom Boden aus steuernden Bedieners angezeigt wird. Nun kann der Bediener einen Umriss einer zu überfliegenden Fläche eingeben. Diese Fläche kann in einfacher Weise zur Bestimmung einer effizienten Flugroute verwendet werden.

Ist die Größe der Fläche unbekannt, so kann das Fluggerät zwei Referenzpunkte in oder an der Fläche anfliegen und aus deren Geokoordinaten deren Abstand zueinander bestimmen. Aus diesem und der bekannten Lage der Referenzpunkte zur markierten Fläche kann die Größe der Fläche bestimmt werden. Beispielsweise kann aus den Referenzpunkten ein Flächenmaßstab gebildet werden.

Eine wichtige Größe zur Bestimmung der Flugroute ist die Flughöhe des Fluggeräts über der Photovoltaikanlage. Ist diese zu groß, so wird die Auswertung fehlerhaft, ist diese zu klein, so werden unnötig viele Bilder zur Auswertung herangezogen werden müssen. Die Vorbestimmung einer guten Flughöhe kann vereinfacht werden, wenn aktuelle visuelle Daten herangezogen werden. Bei Sonnenschein ist mit einem größeren Kontrast der Bilder zu rechnen, sodass das Fluggerät höher fliegen kann, als wenn die Sicht beziehungsweise der Kontrast schlechter ist. Entsprechend ist es vorteilhaft, wenn aus aktuellen visuellen Daten eine Flughöhe des Fluggeräts über die Photovoltaikanlage bestimmt wird, beispielsweise aus einem Übersichts- oder Teilbild der Photovoltaikanlage. Zweckmäßigerweise wird nun die Flughöhe vom Fluggerät automatisiert bei seinem Überflug über die Photovoltaikanlage gehalten. Die Flughöhe kann mit einem Höhensensor des Fluggeräts überprüft und insbesondere geregelt werden.

Die Erfindung ist außerdem gerichtet auf eine Vorrichtung zum Erkennen von Systemfehlern in einer Photovoltaikanlage, umfassend ein Fluggerät mit einer Kamera zur Aufnahme von thermografischen Bildern im infraroten Spektralbereich.

Um eine zuverlässige Erkennung von Systemfehlern zu erreichen, wird vorgeschlagen, dass die Vorrichtung erfindungsgemäß eine Auswerteeinheit umfasst, die dazu vorbereitet ist, die Bilder auf thermische Unterschiede zu untersuchen und aus in vorbestimmter Weise auffälligen Unterschieden Systemfehler zu bestimmen. Die Auswerteeinheit muss nicht am Ort der Photovoltaikanlage sein, sondern kann beispielsweise auf einem entfernten Server durchgeführt werden. Hierfür werden von der Kamera aufgenommene Bilder zum Server geleitet, beispielsweise durch Transport einer Speicherkarte, und dort ausgewertet.

Zum zügigen Übertragen von Daten vom Fluggerät zu einem Server, beispielsweise einem Managementsystem des Anlagenbetreibers, ist es vorteilhaft, wenn das Fluggerät ein Datenmodul und eine Bodenstation, beispielsweise bei einem Bediener des Fluggeräts, ein Mobilgerät aufweist. Das Mobilgerät ist zweckmäßigerweise dazu vorbereitet, Geokoordinaten und insbesondere auch eine Abbildung eines fehlerhaften Moduls vom Datenmodul zu empfangen und an einen Server weiterzuleiten. Wird beispielsweise ein defekter String vom Bediener erkannt, so können dessen Geokoordinaten unverzüglich an den Anlagenbetreiber übermittelt werden, sodass eine zügige Reparatur in Auftrag gegeben werden kann.

Das Datenmodul kann ein Modul sein, das ein Hersteller des Fluggeräts bereits serienmäßig zum Bereitstellen der üblichen, insbesondere alle herstellerseitig bereitgestellten Funktionen des Fluggeräts im Fluggerät verbaut. Auf den Eingriff in möglicherweise schwer zugängliche Schnittstellen kann jedoch verzichtet werden, wenn es ein zusätzliches Datenmodul ist, bei dem der Sender und GPS-Empfänger zusätzlich vorhanden sind.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammenfasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaft der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Photovoltaikanlage mit einer Vielzahl von PV-Modulen, die auf nicht dargestellten Gestellen auf dem Boden montiert sind,
- FIG 2: ein unbemanntes Fluggerät, das von einem Bediener am Boden gesteuert wird,
- FIG 3: eine schematische Draufsicht auf die Photovoltaikanlage und elf Teilbilder der Photovoltaikanlage, die zu einem Gesamtbild der Photovoltaikanlage zusammengesetzt werden,
- FIG 4: einen Ausschnitt der Photovoltaikanlage in einer höher aufgelösten Darstellung mit verschiedenen Systemfehlern,
- FIG 5: ein Temperaturdiagramm über einer Anzahl von Pixeln, das einen Systemfehler zeigt,
- FIG 6: eine Draufsicht auf die Photovoltaikanlage mit einem vom Bediener angegebenen Umriss und einer automatisiert bestimmten Flugroute des Fluggeräts und
- FIG 7: ein Steuergerät beim Bediener zum Steuern des Fluggeräts und das Fluggerät selbst jeweils in einer schematischen Darstellung.

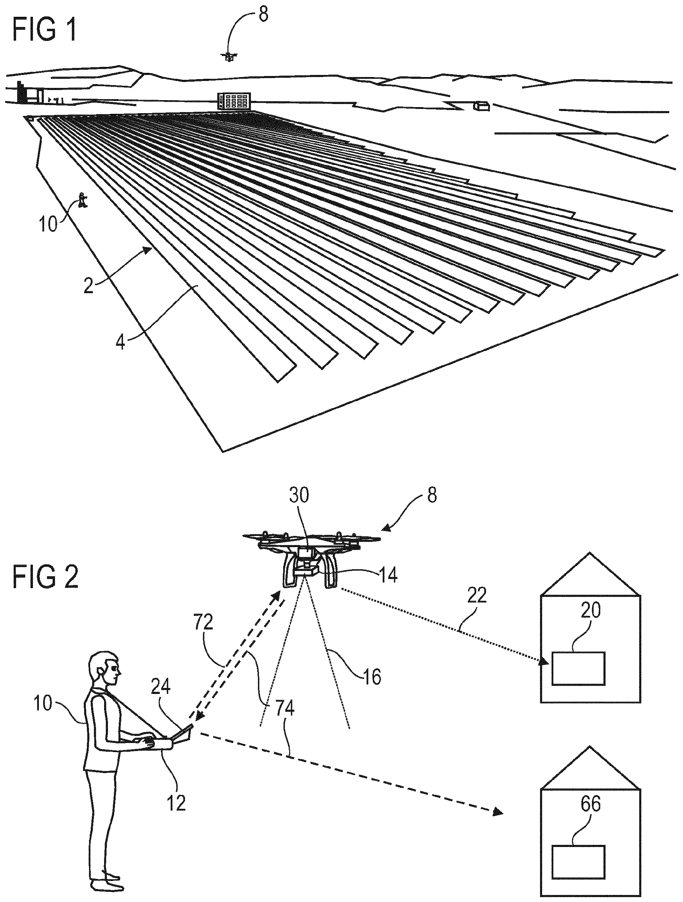

FIG 1 zeigt eine Photovoltaikanlage 2 mit einer Vielzahl von Photovoltaikmodulen 4, die auf nicht dargestellten Ständern auf dem Erdboden in langen Reihen angeordnet sind. Die Photovoltaikanlage 2 soll auf technische Störungen untersucht werden, beispielsweise auf Systemfehler. In der Photovoltaikanlage 2 werden solche Systemfehler durch Ausfälle von Photovoltaikmodulen 4 oder Teilen davon gebildet.

Zum Erkennen und Lokalisieren einer technischen Störung der Photovoltaikanlage 2 wird ein unbemanntes Fluggerät 8 von einem Bediener 10 gestartet und über die Photovoltaikanlage 2 geflogen. Das Fluggerät 8 nimmt Bilder von der Photovoltaikanlage 2 auf, beispielsweise in Form eines Flugfilms, der durch eine nach unten ausgerichtete Kamera 14 (FIG 2) des Fluggeräts 8 aufgenommen wird. Dieser Flugfilm wird direkt oder komprimiert an ein Steuergerät 12 des Bedieners 10 gesendet, sodass dieser eine Liveaufnahme der Sicht der Kamera 14 des Fluggeräts 8 auf einem Bildschirm vor sich sieht, allgemein als Live-Stream bezeichnet. Anhand dieser Aufnahme kann der Bediener 10 das Fluggerät 8 über die Photovoltaikanlage 2 steuern. Nun können mithilfe des Fluggeräts 8 Einzelaufnahmen der Photovoltaikanlage 2 gemacht werden, die für die Analyse auf Systemfehler verwendet werden.

FIG 2 zeigt den Bediener 10 mit seinem Steuergerät 12, mit dem er das unbemannte Fluggerät 8 steuert. Das Fluggerät 8 ist ein Multikopter, in diesem Ausführungsbeispiel ein Quadrokopter, der die Kamera 14 mit einem senkrecht nach unten gerichteten Blickfeld 16 trägt. Die senkrechte Blickrichtung 16 der Kamera 14 bezieht sich auf die waagerechte Ausrichtung des Fluggeräts 8 in der Luft oder am Boden.

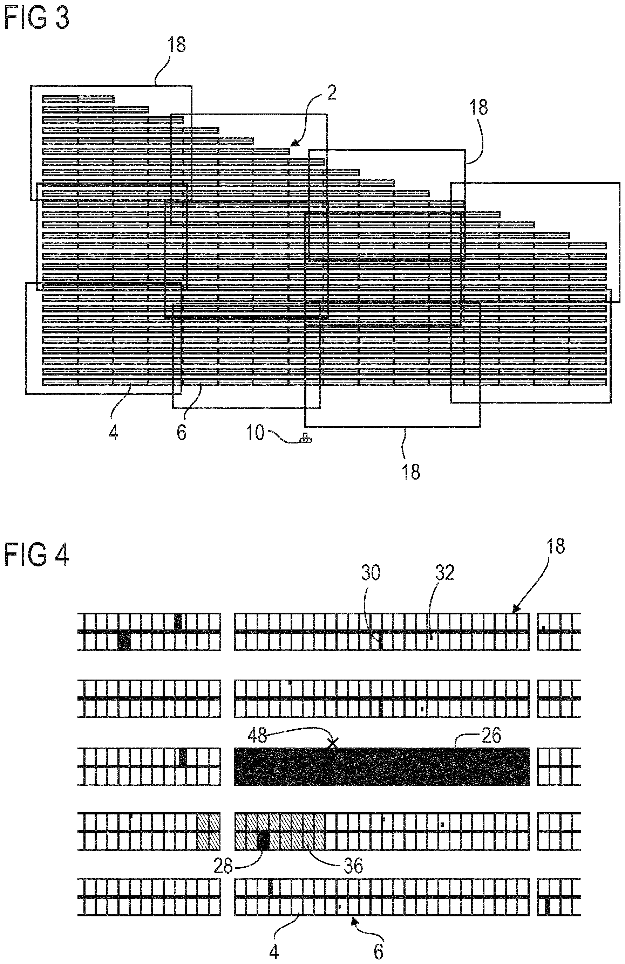

FIG 3 zeigt eine schematische Draufsicht auf die Photovoltaikanlage 2. Zu sehen sind viele Reihen von Photovoltaikmodulen 4, die jeweils aus einer Anzahl von Strings 6 zusammengesetzt sind. Beim Überfliegen der Photovoltaikanlage 2 wird entweder selbstständig durch das Fluggerät 8 oder getriggert durch Eingaben des Bedieners 10 thermografische Bilder 18 von Teilbereichen der Photovoltaikanlage 2 erstellt. Diese Bilder werden auf einem Speicher des Fluggeräts 8 abgespeichert, der nach der Landung des Fluggeräts 8 vom Bediener 10 entnommen und zu einer Auswerteeinheit 20, beispielsweise eines Servicedienstleisters zur Überprüfung von Solaranlagen, gebracht werden kann. Diese Datenübermittlung 22 kann, falls technisch möglich und sinnvoll, drahtlos erfolgen, entweder direkt oder über ein Mobilgerät 24 des Bedieners 10.

FIG 4 zeigt beispielhaft ein Bild 18 der Anlage 2, das eine Vielzahl von Strings 6 mit jeweils einer Vielzahl von Photovoltaikmodulen 4 zeigt. Systemfehler 26, 28, 30, 32 sind dadurch erkennbar, dass die betroffenen Module 4, beziehungsweise Teile davon, wärmer sind, als intakte Module 4 beziehungsweise intakte Bereiche. Dies ist in den thermografischen Bildern 18 sichtbar und ist in FIG 4 durch schwarze Flächen angedeutet. Es sind vier Arten von Systemfehlern 26 - 32 zu sehen. Der schwerste Systemfehler 26 ist der Ausfall eines gesamten Strings 6. Ist nur ein einzelnes Modul 4 ausgefallen, so ist das ein mittelschwerer Systemfehler 28. Bei Ausfall einer Bypass-Diode wird in diesem Ausführungsbeispiel nur ein Drittel einer Modulfläche inaktiv und bildet einen Systemfehler 30. Noch kleinere Modulflächen sind durch Zellfehler betroffen, im Folgenden als Systemfehler 32 bezeichnet.

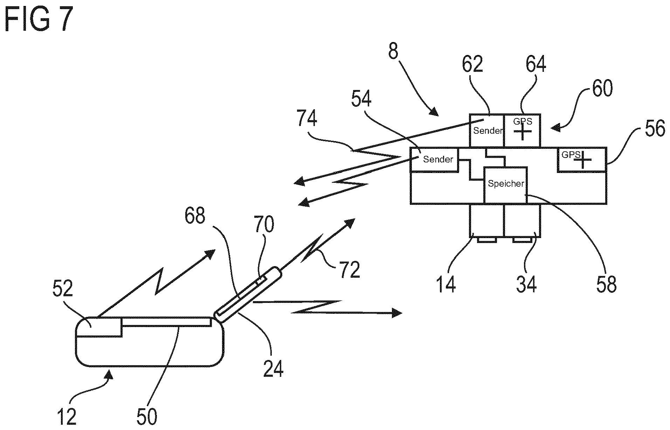

Zur Erstellung eines Reparaturauftrags ist es neben der Erkennung eines Systemfehlers an sich ebenfalls notwendig, die genaue Lage des Systemfehlers innerhalb der Photovoltaikanlage 2 zu bestimmen. Diese Bestimmung kann anhand der thermografischen Bilder 18 durchgeführt werden. Da jedoch mit Bildern im visuellen Spektralbereich eine höhere Auflösung mit vergleichbarem Aufwand zu erzielen ist, kann die Positionsbestimmung einzelner Strings 6 beziehungsweise der darin angeordneten Module 4 exakter mit visuellen Bildern durchgeführt werden. Hierfür trägt das Fluggerät 8 eine zweite Kamera 34 (siehe FIG 7), die im sichtbaren Spektralbereich empfindlich ist. Es ist sinnvoll, wenn die Blickfelder 16 der beiden Kameras 14, 34 identisch sind oder zumindest ihre Ausrichtung, also beispielsweise der Mittelpunkt des Blickfelds 16, identisch beziehungsweise parallel zueinander sind. Hierdurch können einander korrespondierende thermografische Bilder 18 und visuelle Bilder erstellt werden.

Der Live-Stream kann mit der Infrarotkamera 14 aufgenommen werden, sodass thermische Unterschiede im Stream unmittelbar zu erkennen sind. Demgegenüber kann ein Live-Stream, der dem Bediener 10 bei einem Steuern des Fluggeräts 8 zu anderen Zwecken angezeigt wird, z.B. zur Überprüfung einer Flugroute, von der Kamera 34 aufgenommen werden, die im sichtbaren Spektralbereich sensitiv ist.

Die thermografischen Bilder 18 und/oder visuellen Bilder, beide Bildtypen werden im Folgenden vereinfacht als Bilder 18 bezeichnet, werden durch ein Bild-Stitching oder ein Fotogrammmetrie-Verfahren oder ein anderes softwarebasiertes Verfahren zu einem Gesamtbild der Photovoltaikanlage 2 zusammengefügt. Auf dieses Gesamtbild kann nun ein Mustererkennungs-Algorithmus, zweckmäßigerweise eine Rechtecksuche, angewandt werden, durch das die einzelnen Photovoltaikmodule 4 auf dem Gesamtbild der Photovoltaikanlage 2 erkannt werden. Dieser Schritt erlaubt eine Zuordnung von jedem Pixel zu einem Modul 4 oder zu einer Fläche außerhalb des Moduls. Nur diejenigen Bildpixel, die einer Modulfläche zugeordnet sind, werden bei der Analyse auf Systemfehler einbezogen.

Zusätzlich wird jeder Bildpixel einer Modulfläche, insbesondere jeder Bildpixel des Gesamtbilds, hinsichtlich seiner Ortskoordinaten, entweder als absolute Geokoordinaten oder relativ zu einem Anlagenbezugspunkt, bestimmt. Dies ist möglich, wenn innerhalb des Gesamtbilds ein Referenzkoordinatenpunkt und ein Maßstab bekannt sind oder zwei Referenzkoordinatenpunkte. Ist die Dimension, also ein Längenmaßstab, der einzelnen Module 4 oder sogar von Strings 6 bekannt, so kann eine Längenkalibrierung für Bildpixel durchgeführt werden, also Anzahl Bildpixel pro realem Meter Anlagenlänge.

Beispielsweise werden zu jedem Einzelmodul 4 dessen Bildpixelkoordinaten innerhalb des Gesamtbilds zugeordnet und dann werden die Module beziehungsweise deren Bildpixelkoordinaten in absolute oder anlagenrelative Koordinaten umgerechnet. Auf diese Weise ist ein Punkt eines jeden Moduls 4, beispielsweise der Modulmittelpunkt, hinsichtlich seiner Lage bekannt. Nun lässt sich mithilfe der Positionsdaten der Photovoltaikmodule 4 innerhalb der gesamten Anlage 2 ein Plan der gesamten Anlage erstellen. Der Plan kann zweidimensional oder dreidimensional sein.

Die Bestimmung der thermischen Unterschiede wird im Folgenden anhand der Abbildung aus FIG 4 erläutert. Zu jedem zu überprüfenden Anlagenbereich wird eine Referenzfarbe bestimmt. Diese wird durch eine Mittelung von einer Vielzahl von Messwerten beziehungsweise Bildpixeln gebildet. Die Anzahl der Messwerte beziehungsweise Bildpixel ist hierbei so groß, dass Pixelfehler durch die Mittelung nicht als Systemfehler fälschlicherweise erkannt werden. Nun kann die Farbabweichung zwischen den Teilflächen quantifiziert werden. Weist eine Teilfläche oder mehrere nebeneinanderliegenden Teilflächen einen erhöhten Temperaturwert gegenüber ihrer Umgebung auf, so liegt hier ein Kandidat für einen Systemfehler vor. Um die Fläche mit der erhöhten Temperatur herum wird eine ausreichend farbhomogene Fläche als Referenzfläche bestimmt und deren Referenzfarbe wird ermittelt. FIG 4 zeigt eine solche Referenzfläche 36 in Form einer schraffierten Umgebung eines Systemfehlers 28.

Diese Referenzfläche hat zweckmäßigerweise zumindest ein vorbestimmtes Flächenmaß. Die Größe dieses vorgegebenen Mindestmaßes kann in Abhängigkeit zur Größe der Fläche des Fehlerkandidaten abhängig gemacht werden. Je größer die vermeintliche Fehlerfläche ist, desto größer muss die Referenzfläche sein. Liegt beispielsweise ein gesamtes fehlerhaftes Modul vor, so umfasst die Referenzfläche zweckmäßigerweise die Fläche von mehreren umliegenden Modulen. Ist nur eine einzige Zelle ausgefallen, so reicht als Referenzfläche die Fläche eines einzigen Moduls 4 oder auch nur eines Modulbereichs aus. Zweckmäßigerweise werden nur solche Flächen als Fehlerkandidaten behandelt, deren Temperatur gegenüber der Referenzfläche erhöht ist.

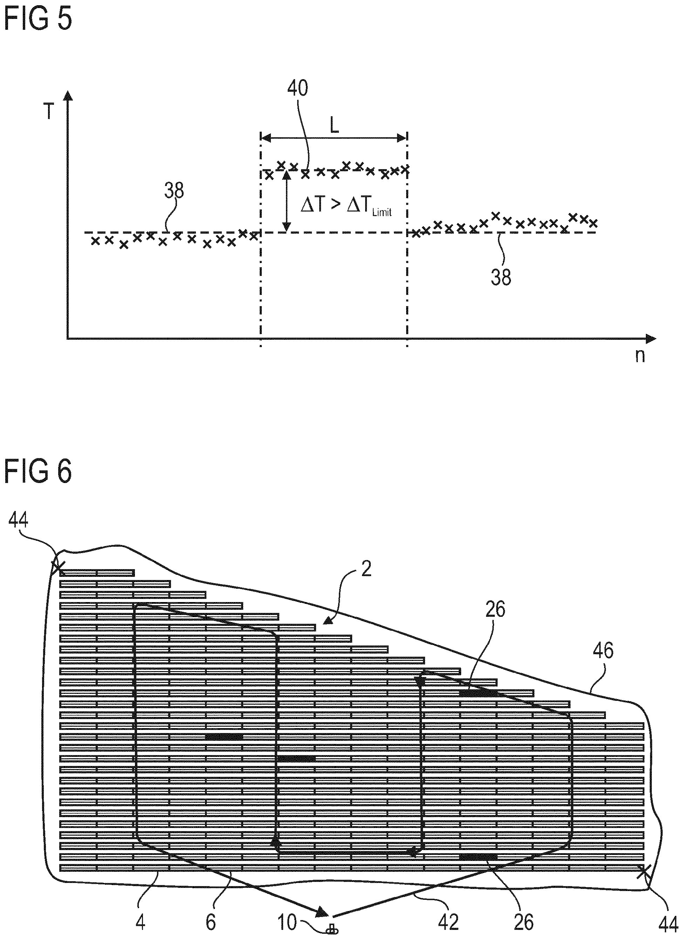

Eine mögliche Quantifizierung des thermischen Unterschieds ist in FIG 5 anhand eines Diagramms dargestellt, das eine Vielzahl von Messwerten beziehungsweise Farbwerten, beispielsweise einzelner Pixel, aufgetragen gegen eine zugeordnete Temperatur oder einen anderen geeigneten Parameter zeigt, wobei n die Pixelnummer oder Messwertnummer angibt. Zur Vereinfachung der Darstellung ist nur eine eindimensionale Darstellung einer an sich zweidimensionalen Modulfläche gezeigt. Dargestellt ist eine Referenzfarbe 38, die durch Mittelung der Farbwerte innerhalb der Referenzfläche 36 gebildet ist. Es ist zu sehen, dass sich die Referenzfläche 36 beidseitig um den Bereich der erhöhten Temperatur ausdehnt. In dem in FIG 5 gezeigten Ausführungsbeispiel weicht die Farbe 40 der erhöhten Temperatur deutlich von der Referenzfarbe 38 ab. Auch die Farbe 40 wird durch Mittelung über den möglichst gesamten Bereich der erhöhten Temperatur gebildet. Nun wird der Unterschied der Temperatur ΔT oder eines anderen geeigneten Parameters, beispielsweise eines Grauwerts, gebildet zwischen der Referenzfarbe 38 und der erhöhten Farbe 40. Ist dieser Unterschied ΔT größer als ein Unterschiedsgrenzwert, beispielsweise ein Temperaturgrenzwert ΔT_{Limit}, so wird die thermisch auffällig unterschiedliche Fläche als Systemfehler 26 - 32 klassifiziert.

Um herauszufinden, um welche Art Systemfehler 26 - 32 es sich handelt, wird die Größe der thermisch auffällig unterschiedlichen Fläche in Relation zu einer Modulfläche oder einer Modullänge, beispielsweise einer Modulbreite, bestimmt. Ist die Fläche oder Breite L so groß wie eine gesamte Modulfläche, so handelt es sich bei dem Systemfehler 28 um einen Modulfehler 28, bei dem ein gesamtes Modul ausgefallen ist. Ist die Fläche beziehungsweise Breite L gleich der eines gesamten Strings 6, so handelt es sich um einen Systemfehler 26, der einen gesamten String 6 als defekt kennzeichnet. Beträgt die Breite ein Drittel einer Modulbreite, so ist das ein Indiz auf eine defekte Bypass-Diode und es handelt sich um einen Systemfehler 30. Bei einer noch kleineren Fläche ist eine oder mehrere Zellen ausgefallen und es handelt sich um einen Systemfehler 32. Selbstverständlich können mehrere gleiche oder unterschiedliche Fehler auch nebeneinander liegen, sodass bei L = ²/₃ Modulbreite es sich um zwei nebeneinander liegende ausgefallene Bypass-Dioden in einem Solarmodul 4 handelt.

In den erstellten Plan kann nun der entsprechende Fehler automatisiert eingezeichnet werden, sodass eine Übersicht über alle Systemfehler 26 bis 32 der Anlage 2 entsteht. Ebenso möglich ist die Erstellung einer Fehlerliste mit der Bezeichnung des Fehlers und einer Ortsangabe. Die Übersicht oder Fehlerliste kann nun einem Anlagebetreiber oder einem anderen Serviceunternehmen zum Beheben der Fehler übermittelt werden.

Bei dem in FIG 3 gezeigten Bild der Anlage 2 ist zu sehen, dass diese durch 11 Teilbilder 18 insgesamt abgedeckt wird. Bei sehr großen Anlagen können mehrere tausend Teilbilder zusammenkommen, die zu einem Gesamtbild zusammengesetzt werden müssen. Dies kann mit einem großen Rechenaufwand verbunden sein. Liegt ein früherer Plan der gesamten Anlage vor, so kann dieser daraufhin ausgewertet werden, ob es zumindest in einem Teilbereich der Anlage 2 eine Modulkonstellation gibt, bei der die einzelnen Module 4 individualisiert zueinander angeordnet sind. Durch leichte Verschiebungen zueinander kann ein individuelles Muster entstehen, das diesem Anlagenteil ein individuelles Aussehen gibt.

Daher kann beispielsweise zu einem oder mehreren der Teilbilder 18 eine Mustererkennung durchgeführt werden, die beispielsweise zur Bestimmung von Ausrichtungsunterschieden dient. Winkel zwischen benachbarten Modulen 4 können hierbei quantifiziert werden. Eine Vielzahl von Winkeln liefert einen individuellen Fingerprint der Module 4 dieses Teilbilds 18. Ein solcher Fingerprint kann mit den Modulen der gesamten Anlage verglichen werden. Wird ein gleicher oder ausreichend ähnlicher Fingerprint gefunden, so kann das Teilbild 18 den diesem ähnlichen Fingerprint zugeordneten Modulen hinsichtlich ihrer Koordinaten zugewiesen werden.

Um auszuschließen, dass die Teilbilder 18 so zueinander liegen, dass einzelne Module 4 nicht aufgenommen wurden oder die Bilder 18 einander zu sehr überlappen, kann ein Flugweg 42 bestimmt werden, der in FIG 6 beispielhaft gezeigt ist. Zur Bestimmung des Flugwegs 42 ist es notwendig, dass bereits vor dem Überfliegen der Anlage 2 zum Erkennen der Systemfehler 26 bis 32 ein vollständiger Plan der Anlage 2 vorliegt. Ein solcher kann vom Betreiber der Anlage zur Verfügung gestellt werden. Liegt dieser nicht vor, so muss er während der Fehleranalyse oder zuvor erstellt werden. Hierfür wird die Photovoltaikanlage 2 vom Fluggerät 8 so hoch überflogen, dass die gesamte Anlage 2 oder ein vorbestimmt definierter Teilbereich in einem einzigen Bild vollständig aufgenommen ist. Dieses Gesamtbild der Anlage 2 kann dem Bediener nun auf einer Anzeige seines Steuergeräts 12 oder eines Mobilgeräts 24 angezeigt werden.

Zur Bestimmung des Flugwegs 42 kann der Bediener nun beispielsweise zwei oder mehrere Positionen 44 in der Übersichtsabbildung markieren. Die Geokoordinaten dieser Positionen 44 sind beispielsweise bekannt, sodass nun die absolute Lage des Übersichtsbilds im Raum berechnet werden kann. Eine weitere Möglichkeit besteht darin, dass das Fluggerät 8 zunächst zu den markierten Positionen 44 geflogen wird, sodass die Koordinaten dieser Positionen 44, beispielsweise getriggert durch ein vom Bediener 10 erzeugtes Signal, bestimmt werden. Auch dann ist die Lage des Übersichtsbildes im Raum bekannt. Nun kann die Ausdehnung der gesamten Anlage 2 bestimmt werden, sodass bekannt ist, welche Fläche aufzunehmen ist. Entweder ist dies aus Daten des Betreibers bekannt oder es kann durch eine Mustererkennung des Übersichtsbilds erkannt werden. Eine weitere Möglichkeit besteht darin, dass der Bediener 10 auf dem Übersichtsbild einen Umriss 46 der zu kontrollierenden Fläche eingibt. Dies kann geschehen indem er mit seinem Finger auf einem berührungssensitiven Anzeigefeld, auf dem das Übersichtsbild dargestellt wird, entlangfährt und hierdurch den Umriss 46 erzeugt. Anhand der im Vorhinein oder durch Anflug absolut bekannten Positionen 44 kann anhand des Umrisses 46 nun die zu kontrollierende Fläche bestimmt werden. Aus dieser Fläche und der Bildgröße der Teilbilder kann nun ein Flugweg 42 berechnet werden, entlang dessen das Fluggerät 8 nun automatisiert über die gesamte Anlage 2 geführt wird.

Der Flugweg 42 ist auch abhängig von der Flughöhe des Fluggeräts 8 über der Anlage 2. Eine geeignete Flughöhe kann im Vorhinein bestimmt sein, vom Bediener 10 vorgegeben werden oder anhand von optischen Daten berechnet werden. Bei Sonnenlicht und einem hohen Kontrast kann das Fluggerät 8 beispielsweise die Photovoltaikanlage 2 höher überfliegen als bei schlechterer Sicht. Beispielsweise wird ein Übersichtsbild vom Steuergerät 12 oder Mobilgerät 24 auf seinen Kontrast ausgewertet und hierdurch eine geeignete Flughöhe bestimmt. Der Flugweg 42 kann nun anhand der Flughöhe und der damit verbundenen Größe der Teilbilder 18 bestimmt werden und das Fluggerät 8 fliegt nun die gesamte Anlage systematisch ab. Die Flughöhe wird mit einem barometrischen Höhensensor des Fluggeräts selbständig vom Fluggerät geregelt.

Wie aus FIG 6 zu sehen ist, enthält die Anlage mehrere schwere Systemfehler 26 in Form von ausgefallenen Strings 6. Um diese dem Anlagebetreiber schnellstmöglich mitteilen zu können, ist es vorteilhaft, wenn der Bediener 10 während des Überflugs des Fluggeräts 8 über die Anlage 2 schwere Systemfehler 26 beziehungsweise 26 und 28 erkennt und noch während des Überflugs markiert. Erkennt der Bediener 10 beispielsweise auf der Anzeige seines Steuergeräts 12 einen solchen schweren Systemfehler 26, 28 so bestimmt er dessen Position und meldet diese sofort an den Betreiber weiter. Der Betreiber kann nun die sofortige Reparatur dieser schweren Systemfehler 26, 28 veranlassen.

Zum schnellen Lokalisieren der schweren Systemfehler 26, 28 sollte das Fluggerät 8 möglichst genau über einem solchen Fehler 26, 28 positioniert sein. Beispielsweise wird das Fluggerät 8 vom Bediener 10 manuell über den entsprechenden Anlagenteil gesteuert. Erreicht das Fluggerät 8 eine geeignete Position 48, wie in FIG 4 angedeutet ist, so ist die Position der Störung 26, 28 bei bekannter Position des Fluggeräts 8 bekannt. Die Position 48 befindet sich selbstverständlich oberhalb des Systemfehlers 26, ist jedoch bei einer nur zweidimensionalen Betrachtung direkt an dem Systemfehler 26 gelegen. Hierfür steuert der Bediener 10 das Fluggerät zum visuell erkannten Systemfehler 26, indem er so fliegt, dass der erkannte Fehler 26 zumindest im Wesentlichen in der Mitte des Bildfelds der aufnehmenden Kamera 14 beziehungsweise der Anzeige auf seinem Steuergerät liegt, wie in FIG 4 beispielhaft dargestellt ist. Bedingt durch etwas Seitenwind gelingt dem Bediener 10 das nicht immer ganz genau, wie in FIG 4 dargestellt ist, jedoch in ausreichendem Maße. Umfasst das Fluggerät 8 einen GPS-Empfänger, und wird die aktuelle Koordinate dem Bediener 10 angezeigt, so kann er diese direkt an den Betreiber übermitteln, beispielsweise indem er die Koordinate per Telefon durchgibt.

Zweckmäßigerweise fliegt das Fluggerät 8 nach einem manuellen Eingriff des Bedieners 10, durch den eine Position eines schweren Systemfehlers 26, 28 bestimmt werden soll, selbständig wieder auf seine vorbestimmte Flugbahn 42 und setzt seinen Anlagenscan selbständig fort. Auf diese Weise kann eine zuverlässige Aufnahme aller Module 4 der Anlage 2 gewährleistet werden.

Ein schnelleres und zuverlässigeres Verfahren zum Lokalisieren von schweren Systemfehlern 26, 28 wird im Folgenden anhand der Darstellung aus FIG 7 beschrieben. FIG 7 zeigt das Steuergerät 12 und das Fluggerät 8 in einer schematischen Darstellung. Wie aus FIG 7 zu sehen ist, ist das Steuergerät 12 mit einem Anzeigefeld 50 versehen, auf dem der Flugfilm komprimiert oder unkomprimiert dem Bediener 10 angezeigt wird. Diese visuelle Information wird aus den Bilddaten der Kamera 14 gewonnen, drahtlos an das Steuergerät 12 übertragen und dort angezeigt. Das Steuergerät 12 umfasst ferner eine Kommunikationseinheit 52 mit einem Sender, mit dem das Steuergerät 12 Steuerdaten zur Steuerung des Fluggeräts 8 drahtlos an dieses übermittelt. Die Kommunikationseinheit 52 enthält außerdem einen Empfänger zum Empfangen von Steuerdaten, Positionsdaten und den Flugfilm zum Anzeigen auf dem Anzeigefeld 50.

Auch das Fluggerät 8 umfasst eine Kommunikationseinheit 54 mit einem Sender und einem Empfänger. Dies ist das Gegenstück zur Kommunikationseinheit 52 des Steuergeräts 12 und dient zum besagten Datenaustausch mit dieser. Über einen GPS-Empfänger 56 empfängt das Fluggerät 8 seine aktuellen Positionsdaten und sendet diese über die Kommunikationseinheiten 54 und 52 an das Steuergerät 12 beziehungsweise den Bediener 10. Der GPS-Empfänger 56 und die Kommunikationseinheit 54 sind Teil eines ersten Datenmoduls, das mit dem Steuergerät 12 kommuniziert, und über das die vollständige Funktion des Fluggeräts 8, wie von dessen Hersteller zur Verfügung gestellt ist, erreicht werden kann. Dies geschieht auch unter Zuhilfenahme weiterer Einheiten, wie einem Datenspeicher 58 und der zweiten Kamera 34 für visuelle Aufnahmen.

Das Fluggerät 8 umfasst jedoch auch ein zweites Datenmodul 60 mit einer weiteren Kommunikationseinheit 62 umfassend einen Sender und einen Empfänger und mit einem weiteren GPS-Empfänger 64. Dieses zweite Datenmodul 60 stellt zusätzlich zu den vollständigen vom Hersteller bereitgestellten Funktionen weitere Funktionen des Fluggeräts 8 zur Verfügung. Das zweite Datenmodul 60 kommuniziert mit dem Mobilgerät 24 des Bedieners 10. Dieses ist im gezeigten Ausführungsbeispiel ein Smartphone, das mit einem Halter am Steuergerät 12 befestigt ist. Das Mobilgerät 24 ist in der Lage, eine Nahbereichskommunikation mit dem Fluggerät 8 über ein Nahbereichsprotokoll, beispielsweise WLAN, aufzubauen und eine Fernkommunikation über ein Fernkommunikationsprotokoll, beispielsweise GSM, mit einem Server 66 (FIG 1), beispielsweise des Betreibers, in einem vom Bediener 10 entfernt angeordneten Gebäude herzustellen. Außerdem enthält das Mobilgerät 24 ein Anzeigefeld 68 und einen Auslöser 70 zum Erzeugen eines Signals 72, dass vom Fluggerät 8 empfangen wird.

Zum Markieren einer schweren Störung 26, 28 erzeugt der Bediener 10, wenn er das Fluggerät 8 in die geeignete Position 48 gelenkt hat, ein Signal 72, durch das mehrere Aktionen ausgelöst werden. Beispielsweise berührt er die sensitive Fläche des Auslösers 70 auf dem Mobilgerät 24. Das Mobilgerät 24 enthält eine Applikation, die vor oder während des Flugs des Fluggeräts 8 über die Photovoltaikanlage 2 eine Nahbereichsverbindung, beispielsweise eine WLAN-Verbindung, mit dem zweiten Datenmodul 60 herstellt. Das Signal 72 wird nun über diese Verbindung zum zweiten Datenmodul 60 beziehungsweise dessen Kommunikationseinheit 62 übersendet. Das zweite Datenmodul liest nun die Geokoordinaten des Fluggeräts 8 aus dem GPS-Empfänger 64 und extrahiert zudem eine Abbildung des Systemfehlers 26, wie beispielhaft in FIG 4 dargestellt ist, aus den von dem Fluggerät 8 aufgenommenen Daten. Geokoordinaten und Abbildungen, im Folgenden vereinfacht als Koordinatendaten 74 bezeichnet, werden nun an das Mobilgerät 24 gesendet. Dieses leitet die Koordinatendaten 74 in identischer oder veränderter Form über die Fernverbindung zum Server 66 weiter. Anhand der Abbildung des Systemfehlers 26 kann der Betreiber nun Art und Umfang des Fehlers erkennen. Aus den Positionsdaten des Fehlers 26 kann der Störungsdienst den Fehler ausreichend genau lokalisieren, sodass er weiß, wo beispielsweise der ausgefallene String 6 liegt. Da die Zeitspanne zwischen dem Erzeugen des Signals 72 und dem Erzeugen des Reparaturauftrags nur wenige Sekunden oder maximal wenige Minuten beträgt, kann ein großer Systemfehler 26, 28 sehr schnell behoben werden.

Bei dem in den Figuren dargestellten Ausführungsbeispiel wird eine Photovoltaikanlage 2 auf Systemfehler untersucht. In einem ersten Teil des Verfahrens wird die Photovoltaikanlage 2 mit mehreren Bildern 18 abgedeckt, diese werden zu einem Übersichtsbild zusammengefügt, darin wird die Lage der PV-Module 4 ermittelt und in Beziehung zu einem örtlichen Bezugspunkt gebracht, um die Module 4 lokalisieren zu können. Im zweiten Teil des Verfahrens wird das Übersichtsbild auf thermische Auffälligkeiten untersucht und es werden Systemfehler bestimmt.

Der zweite Teil des Verfahrens ist unabhängig vom ersten Teil anwendbar, z.B. wenn nur ein Bild der Anlage 2 vorliegt und die Lage der Module 4 bereits bekannt ist oder nicht benötigt wird. Auch die Anzahl der Bilder 18 ist variabel von einem Übersichtsbild oder einem Teilbild 18, das einzeln ausgewertet wird, bis mehrere Bilder 18, die zusammengesetzt werden.

### Bezugszeichenliste

- 2: Photovoltaikanlage
- 4: Photovoltaikmodul
- 6: String
- 8: Fluggerät
- 10: Bediener
- 12: Steuergerät
- 14: Kamera
- 16: Blickfeld
- 18: Thermografisches Bild
- 20: Auswerteeinheit
- 22: Datenübermittlung
- 24: Mobilgerät
- 26: Systemfehler
- 28: Systemfehler
- 30: Systemfehler
- 32: Systemfehler
- 34: Kamera
- 36: Referenzfläche
- 38: Referenzfarbe
- 40: Farbe
- 42: Flugweg
- 44: Position
- 46: Umriss
- 48: Position
- 50: Anzeigefeld
- 52: Kommunikationseinheit
- 54: Kommunikationseinheit
- 56: GPS-Empfänger
- 58: Datenspeicher
- 60: Datenmodul
- 62: Kommunikationseinheit
- 64: GPS-Empfänger
- 66: Server
- 68: Anzeigefeld
- 70: Auslöser
- 72: Signal
- 74: Koordinatendaten
- n: Pixelnummer
- ΔT: Temperaturunterschied
- L: Breite
- ΔT_{Limit}: Temperaturgrenzwert

## Patentansprüche

1. Verfahren zum Erkennen von Systemfehlern (26, 28, 30, 32) einer Photovoltaikanlage (2), bei dem ein Fluggerät (8) die Photovoltaikanlage (2) überfliegt und zumindest ein thermografisches Bild (18) im infraroten Spektralbereich von PV-Modulen (4) der Photovoltaikanlage (2) aufnimmt, das Bild (18) auf thermische Unterschiede untersucht wird und aus in vorbestimmter Weise auffälligen Unterschieden Systemfehler (26, 28, 30, 32) bestimmt werden.

2. Verfahren nach Anspruch 1,
**dadurch gekennzeichnet,**
**dass** zumindest ein zu dem thermografischen Bild (18) korrespondierendes Bild (18) im visuellen Spektralbereich aufgenommen wird und die Lage der Module (4) innerhalb der Photovoltaikanlage (2) aus dem oder den visuellen Bildern (18) und die Systemfehler (26, 28, 30, 32) aus dem oder den den thermografischen Bildern (18) ermittelt werden.

3. Verfahren nach Anspruch 1 oder 2,
**dadurch gekennzeichnet,**
**dass** aus einem Bild (18) der PV-Module (4) die darin sichtbare Fläche der PV-Module (4) durch Mustererkennung bestimmt wird, sodass jeder Bildpixel einem PV-Modul (4) oder einer Modulumgebung zugeordnet werden kann, und zur Bestimmung der thermischen Unterschiede nur die Modulpixel herangezogen werden.

4. Verfahren nach einem der vorhergehenden Ansprüche,
**dadurch gekennzeichnet,**
**dass** aus einem Bild der PV-Module (4) die darin sichtbare Fläche der PV-Modulen (4) durch Mustererkennung bestimmt wird und die Modulposition relativ zu einem anlagefesten Ortspunkt bestimmt wird.

5. Verfahren nach einem der vorhergehenden Ansprüche,
**dadurch gekennzeichnet,**
**dass** zur Bestimmung der thermischen Unterschiede die Farbe einer in vorbestimmtem Flächenmaß ausreichend farbhomogenen Fläche als Referenzfarbe (38) bestimmt wird und innerhalb eines vorbestimmten Abstands von der farbhomogenen Fläche die Farbabweichung von zumindest einer Modulteilfläche der farbhomogenen Fläche zur Referenzfarbe (38) quantifiziert wird, wobei das vorbestimmte Flächenmaß über mehrere PV-Module (4) reicht.

6. Verfahren nach einem der vorhergehenden Ansprüche,
**dadurch gekennzeichnet,**
**dass** die Größe einer thermisch auffällig unterschiedlichen Fläche in Relation zu einer Modulgröße gesetzt wird und der Systemfehler (26, 28, 30, 32) anhand der Relation klassifiziert wird in eine der Klassen: Anlagenteilfehler, Stringfehler (26), Modulfehler (28), PID-Fehler, Diodenfehler (30) oder Zellfehler (32).

7. Verfahren nach einem der vorhergehenden Ansprüche,
**dadurch gekennzeichnet,**
**dass** die Größe einer thermisch auffällig unterschiedlichen Fläche in Relation zu einer Modulgröße gesetzt wird und unter Verwendung der Relation eine Defektwahrscheinlichkeit bestimmt wird.

8. Verfahren nach einem der vorhergehenden Ansprüche,
**dadurch gekennzeichnet,**
**dass** die individuelle Stellung von mehreren Modulen (4) zueinander und hieraus die Lage dieser Module (4) innerhalb der Photovoltaikanlage (2) bestimmt wird.

9. Verfahren nach einem der vorhergehenden Ansprüche,
**dadurch gekennzeichnet,**
**dass** das Fluggerät (8) von einem Bediener (10) am Boden ferngesteuert wird, ein von einer Kamera (14, 34) des Fluggeräts (8) aufgenommener Live-Stream auf einer Anzeige (50) beim Bediener (10) dargestellt wird und der Bediener (10) während des Flugs des Fluggeräts (8) über die Photovoltaikanlage (2) eine optisch auffällige Stelle aus der Darstellung erkennt und bei deren Überflug ein Signal (72) erzeugt, und durch das Signal (72) die Übermittlung der Geokoordinaten des Fluggeräts (8) über dieser Stelle und eine Abbildung der auffälligen Stelle drahtlos an einen Server (66) getriggert wird.

10. Verfahren nach einem der vorhergehenden Ansprüche,
**dadurch gekennzeichnet,**
**dass** eine Flugroute (42) des Fluggeräts (8) über die Photovoltaikanlage (2) bestimmt wird und das Fluggerät (8) diese Flugroute (42) automatisiert abfliegt.

11. Verfahren nach einem der vorhergehenden Ansprüche,
**dadurch gekennzeichnet,**
**dass** vom Fluggerät (8) ein Übersichtsbild der Photovoltaikanlage (2) erstellt wird, das auf einer Anzeige (50) eines das Fluggerät (8) vom Boden aus steuernden Bedieners (10) angezeigt wird, der Bediener (10) einen Umriss (46) einer zu überfliegenden Fläche eingibt, das Fluggerät (8) zwei Referenzpunkte (44) anfliegt und aus deren Geokoordinaten deren Abstand zueinander und daraus einen Flächenmaßstab und damit eine Flugroute (42) über die Photovoltaikanlage (2) bestimmt wird.

12. Verfahren nach einem der vorhergehenden Ansprüche,
**dadurch gekennzeichnet,**
**dass** aus aktuellen visuellen Daten eine Flughöhe des Fluggeräts (8) über die Photovoltaikanlage (2) bestimmt wird und die Flughöhe vom Fluggerät (8) automatisiert gehalten wird.

13. Vorrichtung zum Erkennen von Systemfehlern (26, 28, 30, 32) in einer Photovoltaikanlage (2), umfassend ein Fluggerät (8) mit einer Kamera (14) zur Aufnahme von thermografischen Bildern (18) im infraroten Spektralbereich und eine Auswerteeinheit (20), die dazu vorbereitet ist, ein oder mehrere solcher Bilder (18) auf thermische Unterschiede zu untersuchen und aus in vorbestimmter Weise auffälligen Unterschieden Systemfehler (26, 28, 30, 32) zu bestimmen.

14. Vorrichtung nach Anspruch 13,
**dadurch gekennzeichnet,**
**dass** das Fluggerät (8) ein Datenmodul (60) und ein Bediener (10) des Fluggeräts (8) ein Mobilgerät (24) aufweist, das dazu vorbereitet ist, Geokoordinaten und eine Abbildung eines fehlerhaften Moduls (4) vom Fluggerät (8) zu empfangen und an einen Server (66) weiterzuleiten.
